Europäisches Patentamt

**European Patent Office**

**Office européen des brevets**

(11) Numéro de publication: **0 261 293 B1**

(12) **FASCICULE DE BREVET EUROPEEN**

(45) Date de publication du fascicule du brevet:
**22.11.90**

(51) Int. Cl.⁵: **F16J 15/48**, F15B 1/053,
F16F 9/06

(21) Numéro de dépôt: **86402107.6**

(22) Date de dépôt: **25.09.86**

(54) Dispositif d'étanchéité pour piston flottant.

(43) Date de publication de la demande:
**30.03.88 Bulletin 88/13**

(45) Mention de la délivrance du brevet:
**22.11.90 Bulletin 90/47**

(84) Etats contractants désignés:
**AT BE CH DE GB IT LI LU NL SE**

(56) Documents cités:
**DE-A- 2 051 595**
**DE-A- 2 738 809**
**FR-A- 2 179 288**
**GB-A- 529 885**

(73) Titulaire: **Société Anonyme dite LE JOINT FRANCAIS,**
**84-116, rue Salvador Allende, F-95870 Bezons(FR)**

(72) Inventeur: **Lamy, Christian, 27 rue des Rosiers,**
**F-22190 Plerin(FR)**

(74) Mandataire: **Weinmiller, Jürgen et al,**
**Lennéstrasse 9 Postfach 24, D-8133 Feldafing(DE)**

## Description

La présente invention concerne un dispositif d'étanchéité pour piston flottant coulissant dans un cylindre et séparant un milieu liquide d'un gaz sous pression, et formé par une bague en matériau rigide munie d'un joint en matériau élastique disposé dans une gorge périphérique du piston. De tels dispositifs sont employés notamment dans les amortisseurs oléo-pneumatiques d'automobiles.

Des dispositifs d'étanchéité connus comprennent une tête de piston munie d'une gorge périphérique dans laquelle est logé un joint torique. Compte tenu des pressions exercées, ils nécessitent une étanchéité parfaite entre la tête métallique circulaire formant piston flottant et le joint, ainsi qu'entre ce joint et le corps du cylindre. Ceci impose un usinage précis pour les pièces métalliques et un moulage précis pour le joint. Néanmoins des défauts d'étanchéité apparaissent fréquemment, soit sous l'effet d'un déroulement sur lui-même du joint avec déplacement dans la gorge et la bague, soit sous celui d'un déplacement de la bague munie de son joint d'une manière non perpendiculaire au corps de l'amortisseur.

Les documents FR-A 2 063 665 ou DE-A 2 051 595 décrivent un piston flottant formé par une armature métallique cylindrique enserrant un élément en caoutchouc dont une tête est de diamètre supérieur au sien et vient assurer l'étanchéité contre la surface intérieure du cylindre. Si pour une raison quelconque le piston ne se déplace plus coaxialement au cylindre, l'étanchéité est affaiblie de l'un des côtés du piston, et le bord de l'armature métallique risque de venir porter contre la surface intérieure du cylindre du côté opposé et rayer celle-ci.

Le document FR-A 2 179 288 décrit un piston complexe, muni d'une bague annulaire venant appuyer sous l'effet de la pression du fluide qui s'exerce sur lui sur un manchon cylindrique en caoutchouc, qui se gonfle alors pour dilater une chemise métallique extensible. Il n'assure l'étanchéité que sous l'effet de la pression d'un seul côté, et il apparaît un défaut d'étanchéité et un danger de rayure du cylindre par la chemise métallique si l'axe du piston ne coïncide plus avec celui du cylindre.

Le document GB-A 529 885 décrit un dispositif d'étanchéité pour piston flottant coulissant dans un cylindre, notamment pour pompe, formé par une bague rigide en bois, munie d'un joint en liège disposé dans une gorge périphérique du piston et débouchant sur le pourtour de celui-ci, de façon à présenter une surface d'appui sur le cylindre formée par une couronne sphérique.

La présente invention a pour but de procurer un dispositif d'étanchéité de fabrication facile et peu onéreux, qui assure une excellente étanchéité même si le piston ne se trouve plus dans un plan perpendiculaire à l'axe du cylindre, sans risque de dégradation de la surface interne de ce dernier.

Le dispositif selon l'invention est caractérisé en ce que la bague est en métal ou en matière plastique, et en ce que le joint est en élastomère moulé dans une cavité de la bague débouchant sur son pourtour et présente une surface d'appui sur le cylindre formée par une couronne sphérique de rayon égal à celui du cylindre.

De préférence, la cavité de la bague dans laquelle est moulé le joint comporte une ouverture sur au moins l'une des faces planes de la bague.

Il est décrit ci-après, à titre d'exemple et en référence aux figures du dessin annexé, deux dispositifs d'étanchéité pour amortisseur oléo-pneumatique selon l'invention.

La figure 1 représente un dispositif d'étanchéité en coupe par l'axe du cylindre.

La figure 2 représente une variante d'un tel dispositif.

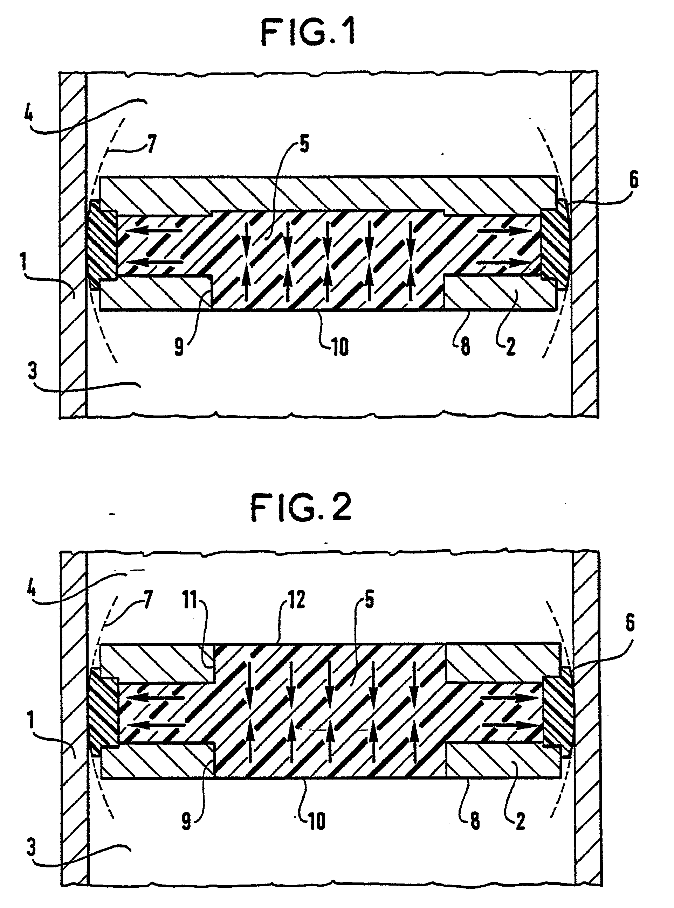

Dans la figure 1, il est disposé dans le cylindre 1 une bague 2 en métal ou en matière plastique, séparant une zone inférieure remplie d'huile 3 d'une zone supérieure 4 remplie d'un gaz sous haute pression.

La bague 2 comporte une cavité interne circulaire dans laquelle a été moulé un joint 5 en élastomère. Ce joint débouche sur le pourtour de la bague 2 et vient au contact du cylindre 1. Sa surface de contact avec le cylindre n'est cependant pas formée, comme dans les dispositifs connus, par la surface d'un tore, mais par la surface 6 d'une couronne sphérique de rayon égal à celui du cylindre (portion de la sphère 7 représentée partiellement en trait interrompu). On voit que, si la bague 2 vient à ne plus se présenter tout à fait perpendiculairement à l'axe du cylindre, le joint vient toujours porter sur la surface interne de ce dernier, et l'étanchéité n'est pas diminuée. Par ailleurs, la face inférieure 8 de la bague 2 est percée d'une ouverture cylindrique 9, de sorte que le matériau élastomère est soumis sur la surface 10 à la pression de l'huile. L'élastomère étant incompressible, tout établissement d'une surpression dans l'huile vient augmenter la pression de contact du joint sur la surface du cylindre, les efforts se propageant à l'intérieur de l'élastomère comme représenté par les flèches.

Bien entendu, l'élastomère du joint doit présenter une bonne résistance à l'abrasion et son élasticité est choisie en fonction du type d'amortissement recherché.

Le dispositif représenté en figure 2 est analogue à celui de la figure 1, mais la bague est percée d'ouvertures cylindriques 9 et 11 à la fois sur ses faces inférieure et supérieure. Le matériau élastomère est donc soumis sur la surface 12 à la pression du gaz. Toute surpression dans le gaz sous pression au contact de la surface 12 vient également augmenter la pression de contact du joint sur la surface du cylindre, les efforts se propageant à l'intérieur de l'élastomère comme représenté par les flèches.

L'invention s'applique, non seulement aux amortisseurs d'automobiles, mais aussi à tous les amortisseurs dans lesquels on recherche une excellente étanchéité entre les deux faces d'un piston flottant.

## Revendications

1. Dispositif d'étanchéité pour piston flottant coulissant dans un cylindre (1) et séparant un milieu liquide (3) d'un gaz sous pression (4), et formé par une bague en matériau rigide (2), munie d'un joint en matériau présentant de l'élasticité (5) disposé dans une gorge périphérique du piston, caractérisé en ce que la bague est en métal ou en matière plastique, et en ce que le joint est en élastomère moulé dans une cavité de la bague débouchant sur son pourtour et présentant une surface d'appui sur le cylindre formée par une couronne sphérique de rayon égal à celui du cylindre.

2. Dispositif selon la revendication 1, caractérisé en ce que la cavité de la bague dans laquelle est moulé le joint comporte une ouverture (9) sur au moins l'une (8) des faces planes de la bague.

**Patentansprüche**

1. Dichtungsvorrichtung für einen schwimmenden Kolben, der in einem Zylinder (1) gleitet und ein flüssiges Medium (3) von einem unter Druck stehenden Gas (4) trennt und von einem Ring (2) aus starrem Material gebildet wird, der mit einer Dichtung (5) aus elastischem Material versehen ist, welche in einer Umfangsnut des Kolbens angeordnet ist, dadurch gekennzeichnet, daß der Ring aus Metall oder Kunststoffmaterial ist und daß die Dichtung aus Elastomer besteht, das in einen Hohlraum des Rings auf seinem Umfang eingegossen ist, und eine Auflagefläche auf dem Zylinder aufweist, die aus einer kugelförmigen Krone besteht, deren Radius gleich dem des Zylinders ist.

2. Vorrichtung nach Anspruch 1, dadurch gekennzeichnet, daß der Hohlraum des Rings, in den die Dichtung gegossen ist, eine Öffnung (9) auf mindestens einer (8) der ebenen Flächen des Rings enthält.

**Claims**

1. A sealing device for a floating piston sliding in a cylinder (1) and separating a liquid medium (3) from a gas under pressure (4), and constituted by a ring (2) of rigid material, the ring being provided with a gasket of material having elasticity (5) disposed in a peripheral groove of the piston, the device being characterized in that the ring is made of metal or of plastics material, and in that the gasket is made of an elastomer molded in a cavity of the ring opening out around its periphery and presenting a bearing surface against the cylinder constituted by a zone of a sphere having the same radius as the cylinder.

2. A device according to claim 1, characterized in that the cavity in the ring in which the gasket is molded has an opening (9) in at least one (8) of the plane faces of the ring.

# FIG.1

# FIG.2